# EUROPEAN PATENT APPLICATION

(11) **EP 3 679 827 A1**
(43) Date of publication of application: **15.07.2020**
(21) Application number: 19182065.3
(22) Date of filing: 24.06.2019
(51) Int. Cl.: A45D 42/16, F16C 11/04, G06F 1/16, F16M 11/10

(54) **ELECTRONIC MIRRORING DEVICE HAVING PRESSURE HINGE**

(30) Priority: 11.01.2019 CN 201910027447
(71) Applicant: CAL-COMP BIG DATA, INC, Shenkeng, New Taipei City 222 (TW)
(72) Inventor: CHIN, Tzu-Wen, 222 NEW TAIPEI CITY (TW); LO, Teng-Nan, New Taipei City (TW)
(74) Representative: 2K Patentanwälte Blasberg Kewitz & Reichel

(57) **Abstract**

An electronic mirroring device having a pressure hinge is provided, the electronic mirroring device has a supporter (1), a mirroring display (2) and a pressure hinge assembly (3). The mirroring display (2) is connected into the supporter (1) by a cable. The pressure hinge assembly (3) is connected with the supporter (1) and the mirroring display (2), and the pressure hinge assembly (3) has a first hinge portion (30) and a second hinge portion (31) pivoted with each other, a cabling space (300) allowing the cable (22) inserted therethrough is defined in the first hinge portion (30), a contacting surface (301) is defined on the first hinge portion (30) for a pivoting motion related to the second hinge portion (31), and the second hinge portion (31) is located corresponding to the first hinge portion (30) via the contacting surface (301). A fastener (33) attached on the contacting surface (301) is arranged between the first and the second hinge portion (31) to position the electronic mirroring device anywhere in a continuous range.

## Description

### BACKGROUND OF THE INVENTION

### Technical Field

The present disclosure is related to an electronic device, and in particular to an electronic mirroring device having a pressure hinge.

### Description of Related Art

A conventional mirror is arranged on a wall or placed on a table, such as a table mirror. Mostly, a conventional table mirror is arranged at a fixed inclination. Alternatively, a hinge could be arranged on the mirror for adjusting an inclination of the table mirror. Usually, the hinge is simply screwed on the table mirror, and the hinge will become loose after a period of use. Therefore, the table mirror cannot be positioned at a required inclination.

Moreover, 3C industries are rapidly developed, a display is combined with a camera to be an electronic mirror device or a smart mirror. Namely, an image of a user is photographed by the camera and the image and/or related data are further present on the display by displaying or mirroring. According to various requirements, the electronic mirror device could optically mirror the image of the user as the conventional mirror. Alternatively, the electronic mirror device could electronically present the image of the user photographed by the camera on a built-in display module (such as an LCD display), and the electronic mirror device achieves a same function as a conventional mirror. Further various electronic and data functions could be presented by the display module of the electronic mirror device. However, the electronic mirror device is usually heavy because electronic elements such as the display module are accommodated therein. Therefore, a conventional screw fixing structure is not suitable for the electronic mirror device. Moreover, the conventional screw fixing structure will become loose after a period of use, and it is insufficient to be used for requirements of the electronic mirror device.

In views of this, in order to solve the above disadvantage, the present inventor studied related technology and provided a reasonable and effective solution in the present disclosure.

### SUMMARY OF THE INVENTION

The main purpose of the present disclosure is providing an electronic mirroring device having a pressure hinge which is a pivot connection of a hinge assembly providing a pressure Thereby, an inclination of the electronic mirroring device could be positioned anywhere in a continuous range.

Accordingly, an electronic mirroring device having the pressure hinge, having a supporter, a mirroring display and a pressure hinge assembly is provided in the present disclosure. The mirroring display is connected into the supporter by a cable. The pressure hinge assembly is respectively connected with the supporter and the mirroring display, and the pressure hinge assembly has a first hinge portion and a second hinge portion pivoted with each other, a cabling space allowing the cable inserted therethrough is defined in the first hinge portion, a contacting surface is defined on the first hinge portion for a pivoting motion related to the second hinge portion, and the second hinge portion is located corresponding to the first hinge portion via the contacting surface. A fastener attached on the contacting surface is arranged between the first hinge portion and the second hinge portion.

### BRIEF DESCRIPTION OF DRAWING

The present disclosure can be more fully understood by reading the following detailed description of the embodiment, with reference made to the accompanying drawings as follows:
Fig. 1 is a perspective view showing the present disclosure.
Fig. 2 is a partial side cross-sectional view showing inner structures of the present disclosure.
Fig. 3 is a partial exploded view showing the present disclosure.
Fig. 4 is a partial rear cross-sectional view showing inner structures of the present disclosure.
Fig. 5 is a cross-sectional view showing a pressure hinge assembly according to the present disclosure.
Fig. 6 is a partial side cross-sectional view showing rotating inner structures of the present disclosure.

### DETAILED DESCRIPTION OF THE INVENTION

Detail descriptions and technical contents of the present disclosure are described below with drawings. However, the drawings are provided for reference and demonstration, and the present disclosure should not be limited by the drawings.

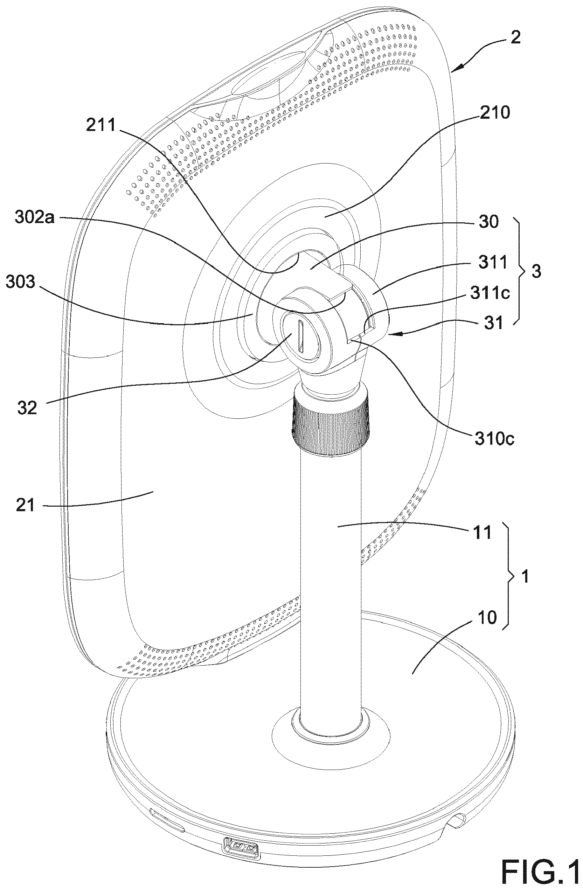

According to Fig. 1, a perspective view showing the present disclosure, an electronic mirroring device having a pressure hinge has a supporter 1, a mirroring display 2, and a pressure hinge assembly 3 in the present disclosure. Specifically, the supporter 1 is used for supporting the mirroring display 2 on a location such as a desk so that the mirroring display 2 could be disposed in front of a user. The pressure hinge assembly 3 is connected between the supporter 1 and the mirroring display 2, and therefore an inclination of the mirroring display 2 related to the user could be conveniently adjusted by the user.

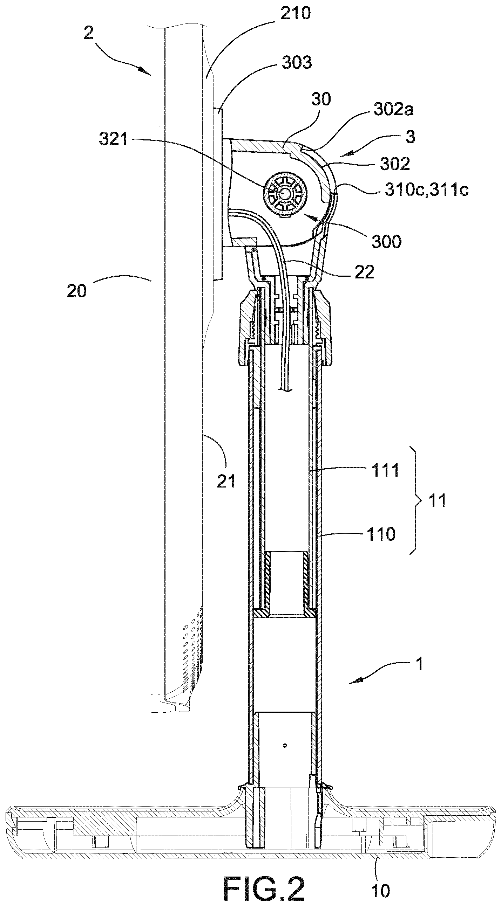

Further according to Fig. 2, the supporter 1 mainly has a base 10 and a supporting rod 11 upright arranged on the base 10. The supporting rod 11 could have a first rod 110 and a second rod 111 assembled with each other. The second rod 111 could be inserted into the first rod 110 and arranged moveable. Accordingly, the second rod 111 could be telescoped out of or into the first rod 110 so that the supporting rod 11 could extend or shorten. Furthermore, circuit board(s) and electronic element(s) thereof (not shown in Figs.) for the aforementioned mirroring display 2 could be accommodated in the base 10. The supporting rod 11 could be hollow and communicated with a space in the base 10.

Accordingly, a displaying surface 20 and a back surface 21 opposite to the displaying surface 20 are defined on the mirroring display 2. An image of the user could be photographed by a camera (not shown in Figs.) through the displaying surface 20, and the image of the user could be presented on the displaying surface 20 by displaying or mirroring the photographed image. Meanwhile, a displaying module (not shown in Figs.) could be arranged in the mirroring display 2, and the displaying module could display images on the displaying surface 20.

The pressure hinge assembly 3 has a first hinge portion 30 and a second hinge portion 31 pivoted with each other. The pressure hinge assembly 3 further has a pivoting shaft 32 respectively pivoted with the first hinge portion 30 and the second hinge portion 31. The first hinge portion 30 is arranged on the back surface 21 of the aforementioned mirroring display 2, and the second hinge portion 31 is arranged on one end of the supporting rod 11 of the supporter 1. The supporter 1 and the mirroring display 2 are connected by a connection of the first hinge portion 30 and the second hinge portion 31, and an inclination of the mirroring display 2 related to the user thereby could be adjusted.

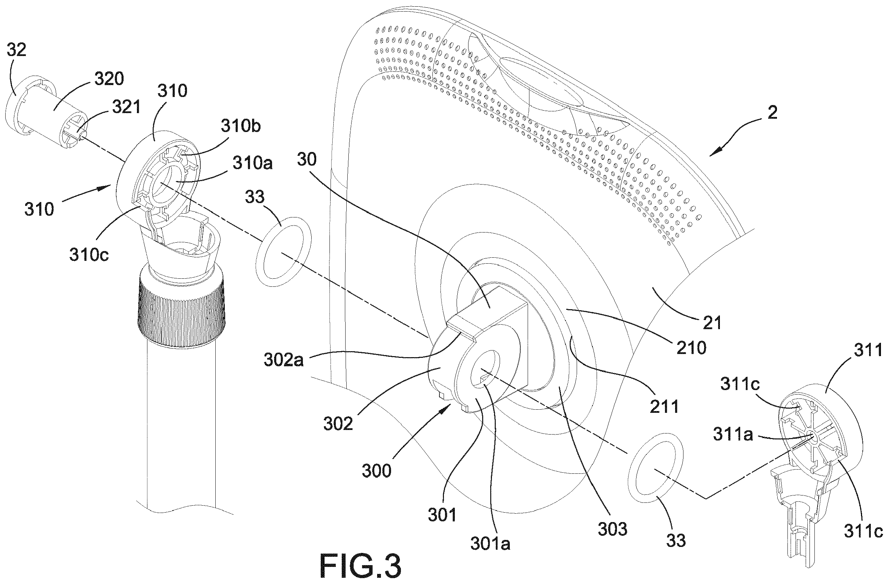

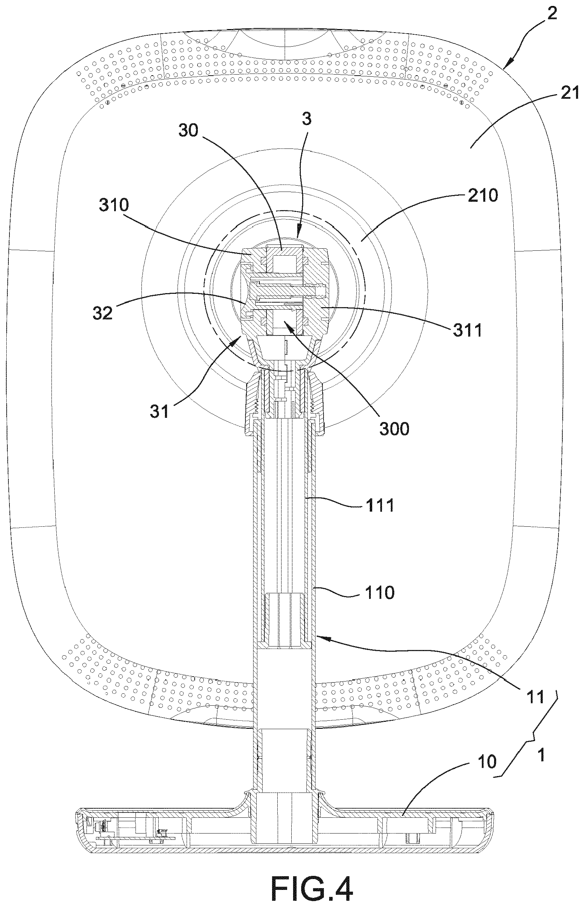

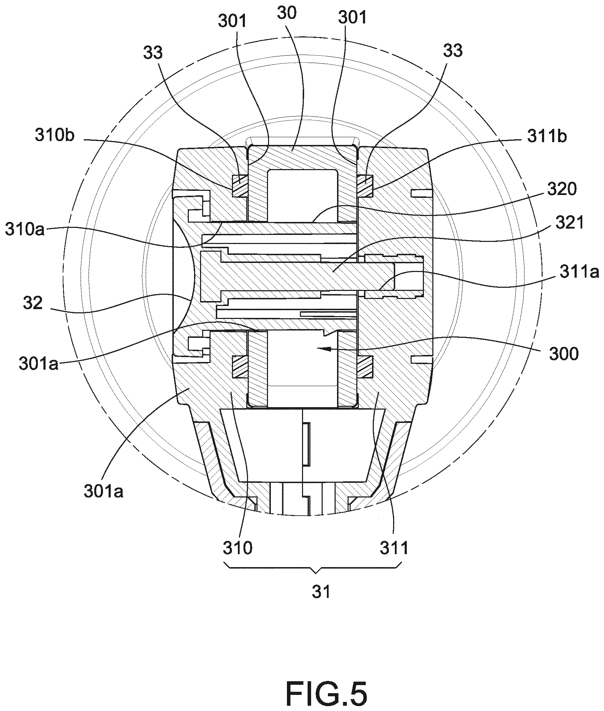

Further according to Fig. 3, a cabling space 300 communicated to the aforementioned mirroring display 2 is defined in the first hinge portion 30, and a cable 22 arranged in the mirroring display 2 thereby could be extended into the supporting rod 11 of the supporter 1 through the cabling space 300, and the cable 22 could be further electrically connected to the circuit board in the base 10. At least one contacting surface 301 is defined on the first hinge portion 30 for a pivoting motion related to the second hinge portion 31, and the second hinge portion 31 is located corresponding to the contacting surfaces 301 of the first hinge portion 30. The first hinge portion 30 and the second hinge portion 31 are pivoted with each other by the pivoting shaft 32. According to the embodiment of the present disclosure shown in Figs. 4 and 5, the second hinge portion 31 has two half shaft portions 310, 311 separated by a gap therebetween, and the first hinge portion 30 is therefore allowed to be arranged between the two half shaft portions 310, 311. The first hinge portion 30 is respectively arranged corresponding to the two half shaft portions 310, 311 through the contacting surfaces 301 at two sides of the first hinge portion 30. A first pivoting hole 301a penetrating through the contacting surfaces 301 is defined on the first hinge portion 30. A second pivoting hole 310a is defined on one of the half shaft portions 310 of the second hinge portion 31. A screwing hole 311a is defined on the other of the half shaft portions 311. A pivoting portion 320 is arranged on the pivoting shaft 32 and a screwing portion 321 is extended from an end of the pivoting portion 320. The pivoting portion 320 of the pivoting shaft 32 is inserted through the second pivoting hole 310a and the first pivoting hole 301a, and the screwing portion 321 is screwed into the screwing hole 311a. The screwing portion 321 and the screwing hole 311a are screwed by thread and the first hinge portion 30 is thereby pivoted with the second hinge portion 31.

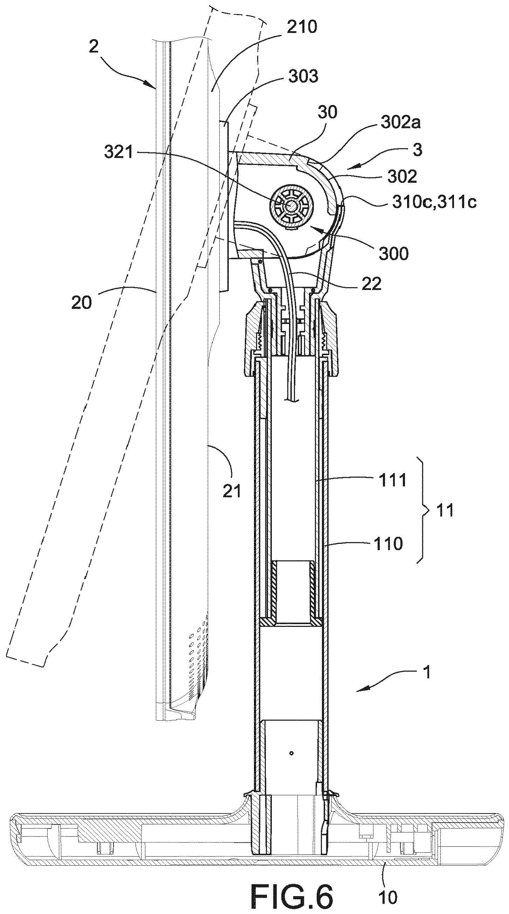

Further according to the present disclosure shown in Figs. 3 and 5, at least one fastener 33 is arranged between the first hinge portion 30 and the second hinge portion 31. Each fastener 33 could be a robber ring contacted with the corresponding contacting surface 301 of the first hinge portion 30. Specifically, a plurality of grooves 310b, 311b corresponding to the contacting surfaces 301 are respectively defined on the two half shaft portions 310, 311 of the second hinge portion 31. Each groove 310b, 311b could be respectively arranged in a ring structure, and the robber rings (namely the fasteners 33) could be embedded therein and thereby positioned. The two half shaft portions 310, 311 are located corresponding to the two respective contacting surface 301 on an external surface of the first hinge portion 30, and the half shaft portions 310, 311 and the first hinge portion 30 are thereby able to be adjusted by pressure of the fastener 33. According to Fig. 6, thereby, an inclination of the mirroring display 2 could be positioned anywhere in a continuous range via the pressure hinge assembly 3.

Moreover, according to Figs. 2 and 3, a limiting arc edge 302 could be defined on the aforementioned first hinge portion 30, and a limiting portion 302a could be defined protruding on the limiting arc edge 302. Abutting portions 310c, 311c slidable along the corresponding limiting arc edge 302 could be respectively defined on the two half shaft portions 310, 311 of the second hinge portion 31. When the inclination of the mirroring display 2 is adjusted, a variable ranged of the inclination is limited by a movable range of the abutting portion 310c, 311c on the limiting arc edge 302. The mirroring display 2 is movable until the abutting portion 310c, 311c is contacted with the limiting portion 302a, and the cable 22 in the pressure hinge assembly 3 is thereby prevented from damages caused by an over pivot motion of the mirroring display 2. Furthermore, a shaft seat 210 could be arranged on the back surface 21 of the mirroring display 2, and the first hinge portion 30 is pivoted on the shaft seat 210. An opening 211 is defined on the shaft seat 210, and the first hinge portion 30 allowing to be inserted in the opening 211. A pivoting edge 303 correspondingly pivoted in the opening 211 is arranged on the first hinge portion 30. Thereby, the mirroring display 2 could be further rotated related to the first hinge portion 30, and the mirroring display 2 thereby could be reversed.

Accordingly, the electronic mirroring device having the pressure hinge of the present disclosure could be implemented via aforementioned structures.

In conclusion, the present disclosure achieves the predetermined purpose, solves exist issues, and it is novel, inventive and able to be applied in industry. The present disclosure meets requirement of patentability. In order to protect right of the applicant, the applicant filed an application according to the patent law, and the applicant respectfully requests for consideration and looks forward to be grant.

## Claims

1. An electronic mirroring device having a pressure hinge, comprising:
a supporter (1);
a mirroring display (2), accommodating a cable (22) therein and the cable (22) being extended into the supporter (1); and
a pressure hinge assembly (3), connected with the supporter (1) and the mirroring display (2), and the pressure hinge assembly (3) comprising a first hinge portion (30) and a second hinge portion (31) pivoted with each other, a cabling space (300) allowing the cable (22) inserted therethrough being defined in the first hinge portion (30), and a contacting surface (301) being defined on the first hinge portion (30) for a pivoting motion related to the second hinge portion (31), and the second hinge portion (31) being located corresponding to the contacting surface (301) of the first hinge portion (30),
wherein a fastener (33) attached on the contacting surface (301) being arranged between the first hinge portion (30) and the second hinge portion (31).

2. The electronic mirroring device having the pressure hinge according to claim 1, wherein the supporter (1) comprises a base (10) and a supporting rod (11) upright arranged on the base (10).

3. The electronic mirroring device having the pressure hinge according to claim 2, wherein the supporting rod (11) comprises a first rod (110) and a second rod (111), the second rod (111) is movably inserted in the first rod (110) and the second rod (111) is extended out of the first rod (110).

4. The electronic mirroring device having the pressure hinge according to claim 2, wherein a displaying surface (20) and a back surface (21) opposite to the displaying surface (20) are defined on the mirroring display (2), the first hinge portion (30) is arranged on the back surface (21), the second hinge portion (31) is arranged on one end of the supporting rod (11), and the cable (22) inserted through the cabling space (300) is thereby allowed to extend into the supporting rod (11) and electrically connected to the base (10).

5. The electronic mirroring device having the pressure hinge according to claim 4, wherein a shaft seat (210) is arranged on the back surface (21) and the first hinge portion (30) is pivoted on the shaft seat (210).

6. The electronic mirroring device having the pressure hinge according to claim 1, wherein a contacting surface (301) is defined on the first hinge portion (30) for a pivoting motion related to the second hinge portion (31), and the fastener (33) is contacted with at least the contacting surface (301) of the first hinge portion (30).

7. The electronic mirroring device having the pressure hinge according to claim 6, wherein the second hinge portion (31) comprises two half shaft portions (310, 311) separated by a gap therebetween, and the first hinge portion (30) is arranged between the two half shaft portions (310, 311).

8. The electronic mirroring device having the pressure hinge according to claim 7, wherein a limiting arc edge (302) is defined on the first hinge portion (30), a limiting portion (302a) is arranged protruding on the limiting arc edge (302), and abutting portions (310c) moveably abutting on the corresponding limiting arc edge (302) are respectively arranged on the two half shaft portions (310, 311).

9. The electronic mirroring device having the pressure hinge according to claim 7, wherein a groove (311b) corresponding to the contacting surface (301) is defined on each of the two half shaft portions (310, 311), and the fastener (33) is embedded in the groove (311b).

10. The electronic mirroring device having the pressure hinge according to claim 9, wherein the groove (311b) is arranged in a ring structure and the fastener (33) is a robber ring embedded in the groove (311b).

11. The electronic mirroring device having the pressure hinge according to claim 6, wherein the pressure hinge assembly (3) further comprises a pivoting shaft (32) pivoted with the first hinge portion (30) and the second hinge portion (31).

12. The electronic mirroring device having the pressure hinge according to claim 11, wherein a first pivoting hole (301a) penetrating through the contacting surface (301) is defined on the first hinge portion (30), a second pivoting hole (310a) is defined on one of the half shaft portions (310) of the second hinge portion (31), a screwing hole (311 a) is defined on the other one of the half shaft portions (311), a pivoting portion (320) is arranged on the pivoting shaft (32) and a screwing portion (321) extended from an end of the pivoting portion (320), the pivoting portion (320) is inserted through the second pivoting hole (310a) and the first pivoting hole (301a), and the screwing portion (321) is screwed in the screwing hole (311a).

13. The electronic mirroring device having the pressure hinge according to claim 1, wherein an opening (211) allowing the first hinge portion (30) to be inserted therein is defined on the mirroring display (2), a pivoting edge (303) correspondingly pivoted in the opening (211) is arranged on the first hinge portion (30), and the mirroring display (2) and first hinge portion (30) are thereby relatively rotatable.
